# EUROPEAN PATENT APPLICATION

(11) **EP 2 177 426 A1**
(43) Date of publication of application: **21.04.2010**
(21) Application number: 09172590.3
(22) Date of filing: 08.10.2009
(51) Int. Cl.: B62K 19/06

(54) **Tubular frame for bicycles**

(30) Priority: 17.10.2008 IT TV20080132; 17.10.2008 IT TV20080133
(71) Applicant: Cicli Pinarello S.P.A., 31050 Villorba (Treviso) (IT)
(72) Inventor: Pinarello, Fausto, 31100, TREVISO (IT)
(74) Representative: Modiano, Micaela Nadia

(57) **Abstract**

A tubular frame (1) for bicycles, particularly with classic diamond shape, comprising a tubular structure (2) that forms at least one front head tube (3) that can be connected to a front fork, a first substantially horizontal tubular body (4) that is functionally connected to the head tube (3) and forms an inlet (5) for mounting a saddle and a second oblique tubular body (6) that is functionally connected to the front head tube (3) and can support a central mechanism. At least one of the two tubular bodies (4,6) has a structurally asymmetric resisting transverse cross-section for asymmetric flexural and torsional stiffening with respect to the longitudinal plane of the frame (1). More specifically, the longitudinal plane is formed by the plane that passes through the axis of the first substantially horizontal tubular body (4) and through the axis of the second oblique tubular body (6).

## Description

The present invention relates to a tubular frame for bicycles, particularly with classic diamond shape.

In a bicycle, the frame is the fundamental part, since in addition to performing the function of a supporting structure onto which all the other parts of the bicycle are assembled, it is subjected to continuous stresses caused mainly by the transfer of power between the legs of the cyclist and the driving wheel, influencing the performance of the bicycle.

The frame of a bicycle is in fact subjected mainly to loads that are introduced by the cyclist during the stroke, i.e., when the thrust applied by the leg to the pedal is converted into traction applied to the driving wheel by way of the transmission system.

More precisely, the pedals are perfectly asymmetrical on the two sides (the right side and the left side), and therefore over time they produce two effects that are identical in intensity but opposite in direction.

These effects are more evident when one studies the deformations of frames for competitive use; during the stroke of a racer, who can achieve the delivery of an average power of 1200 W at a rotation rate of 90 strokes per minute, the frame undergoes flexural and torsional stresses caused by the vertical thrust applied to the pedal by the racer himself, which add to the loads due to the weight of the racer and to the flexural and torsional stresses induced by the racer while he grips the handlebar.

Moreover, the frame undergoes flexural and torsional stresses caused by the transmission system, which in the frames that are currently used is typically mounted completely on the right side.

In greater detail, the traction of the chain between the pinion and the chain ring tends to misalign the axes of the central mechanism and of the driving wheel, which ideally are parallel, entailing flexural and torsional deformations of the frame, which are added to or subtracted from the ones caused by the action of the cyclist on the pedals depending on whether the cyclist pushes on the right pedal or on the left pedal.

In order to avoid structural failures due to the described different stresses, which further add to the effects caused by the discontinuity of the ground on which the bicycle is used, the design of a bicycle frame is performed by seeking the best compromise between flexural and torsional rigidity and weight.

Depending on the type of bicycle and on the cost that it may have, there are different shapes of frames made of different materials.

The most common structure is the one that has the "diamond" shape, structured by means of four tubular bodies (head tube, horizontal tube, vertical tube and oblique tube), which are joined at two nodes to a rear carriage (joined to the coupling forks of the rear wheel), consisting of four thinner tubular bodies (horizontal linings and vertical linings).

Among the cheaper frames of this type, the most widespread are the ones consisting of tubular bodies that have a symmetrical transverse resisting cross-section, which can have a constant thickness or a cross-section that varies along the extension of such tubular body.

On the basis of the stresses described, to which a frame is subjected generally, these known types of frame are not free from drawbacks, which include the fact that a symmetrical frame is either too rigid or too unstable.

In order to obviate this drawback, the background art suggests asymmetric structures but only for the rear part of the frame, i.e., the rear carriage part.

The aim of the present invention is to eliminate the drawbacks noted above, by providing a tubular frame for bicycles, particularly with classic diamond shape, which makes it possible to have flexural and torsional rigidity values that are asymmetric with respect to a longitudinal plane of the bicycle, so as to be neither too unstable nor too rigid regardless of the side of the bicycle that is considered, so as to further optimize the structural behavior of the frame.

Within this aim, an object of the present invention is to propose a tubular frame for bicycles, particularly with classic diamond shape, whose weight and production costs are low, so as to be competitive with respect to known types of frame of the same level.

This aim, as well as these and other objects that will become better apparent hereinafter, are achieved by a tubular frame for bicycles, particularly with classic diamond shape, comprising a tubular structure that forms at least one front head tube that can be connected to a front fork, a first substantially horizontal tubular body that is functionally connected to said head tube and forms an inlet for mounting a saddle and a second oblique tubular body that is functionally connected to said front head tube and can support a central mechanism, **characterized in that** at least one of said tubular bodies has a structurally asymmetric resisting transverse cross-section for asymmetric flexural and torsional stiffening with respect to the longitudinal plane of the frame, said longitudinal plane passing through the axis of said first substantially horizontal tubular body and through the axis of said second oblique tubular body.

Further characteristics and advantages of the present invention will become better apparent from the following detailed description of a preferred but not exclusive embodiment of a tubular frame for bicycles, particularly with classic diamond shape, according to the invention, illustrated by way of non-limiting example in the accompanying drawings, wherein:

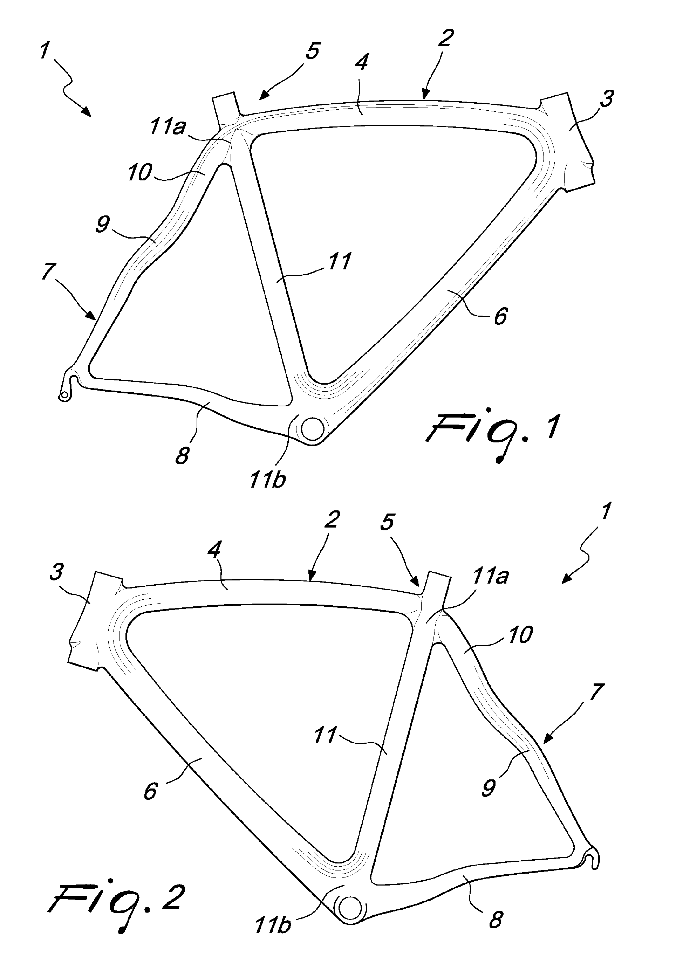

Figure 1 is a side elevation view, taken from the right, of an embodiment of a tubular frame for bicycles, particularly with classic diamond shape, according to the present invention;
Figure 2 is a side elevation view, taken from the left, of the frame shown in Figure 1;
Figure 3 is a plan view of the frame shown in Figure 1;
Figure 4 is a side elevation view, taken from the right, of a second embodiment of the frame shown in Figure 1;
Figure 5 is a sectional view of the frame shown in Figure 4, taken along the line V-V;
Figure 6 is a sectional view of the frame shown in Figure 4, taken along the line VI-VI;
Figure 7 is a sectional view of the frame shown in Figure 3, taken along the line VII-VII;
Figure 8 is a sectional view of the frame shown in Figure 4, taken along the line VIII-VIII;
Figure 9 is a sectional view of the frame shown in Figure 4, taken along the line IX-IX;
Figure 10 is a sectional view of the frame shown in Figure 4, taken along the line X-X;
Figure 11 is a sectional view of the frame shown in Figure 4, taken along the line XI-XI;
Figure 12 is a side elevation view, taken from the right, of a third embodiment of the frame shown in Figure 1;
Figure 13 is a sectional view of the frame shown in Figure 12, taken along the line XIII-XIII;
Figure 14 is a sectional view of the frame shown in Figure 12, taken along the line XIV-XIV;
Figure 15 is a sectional view of the frame shown in Figure 12, taken along the line XV-XV;
Figure 16 is a sectional view of the frame shown in Figure 12, taken along the line XVI-XVI;
Figure 17 is a sectional view of the frame shown in Figure 12, taken along the line XVII-XVII;
Figure 18 is a sectional view of the frame shown in Figure 12, taken along the line XVIII-XVIII;
Figure 19 is a sectional view of the frame shown in Figure 12, taken along the line XIX-XIX;
Figure 20 is a side elevation view, taken from the right, of a fourth embodiment of the frame shown in Figure 1;
Figure 21 is a sectional view of the frame shown in Figure 20, taken along the line XXI-XXI;
Figure 22 is a sectional view of the frame shown in Figure 20, taken along the line XXII-XXII;
Figure 23 is a sectional view of the frame shown in Figure 20, taken along the line XXIII-XXIII;
Figure 24 is a sectional view of the frame shown in Figure 20, taken along the line XXIV-XXIV;
Figure 25 is a sectional view of the frame shown in Figure 20, taken along the line XXV-XXV;
Figure 26 is a sectional view of the frame shown in Figure 20, taken along the line XXVI-XXVI;
Figure 27 is a sectional view of the frame shown in Figure 20, taken along the line XXVII-XXVII.

With reference to the figures, a tubular frame for bicycles, particularly with classic diamond shape, generally designated by the reference numeral 1, comprises a tubular structure 2, which forms at least one front head tube 3 for connection to a front fork, a first substantially horizontal tubular body 4, which is functionally connected, to resist stresses, to the head tube 3 and forms an inlet 5 for mounting a saddle, and a second oblique tubular body 6, which is functionally connected to the front head tube 3 and supports a central mechanism.

The frame 1 further comprises a rear carriage 7, which is functionally connected to the tubular structure 2 and comprises two horizontal sleeves 8 and a pair of oblique sleeves 9, which consist of tubular bodies that are similar to those of the tubular structure 2 but smaller.

More particularly, the oblique sleeves 9 extend from a third oblique tubular body 10, which is functionally connected to a fourth substantially vertical tubular body 11, which is functionally connected at its ends 11a and 11b to the first substantially horizontal tubular body 4 and to the second oblique tubular body 6 respectively at the inlet 5 for mounting the saddle and at the central mechanism.

More precisely, the inlet 5 for mounting a saddle is formed directly by the fourth substantially vertical tubular body 11.

According to the invention, in order to have a flexural and torsional stiffening that is asymmetric with respect to the longitudinal plane 12 of the frame 1, a plane which passes through the axis of the first substantially horizontal tubular body 4 and through the axis of the second oblique tubular body 6, so as to have a structure that is optimized as a function of the typical asymmetric flexural and torsional stresses to which a frame for bicycles is subjected, at least one of the two tubular bodies 4 or 6 has a transverse resisting cross-section that is structurally asymmetric with respect to the longitudinal plane 12 of the frame 1.

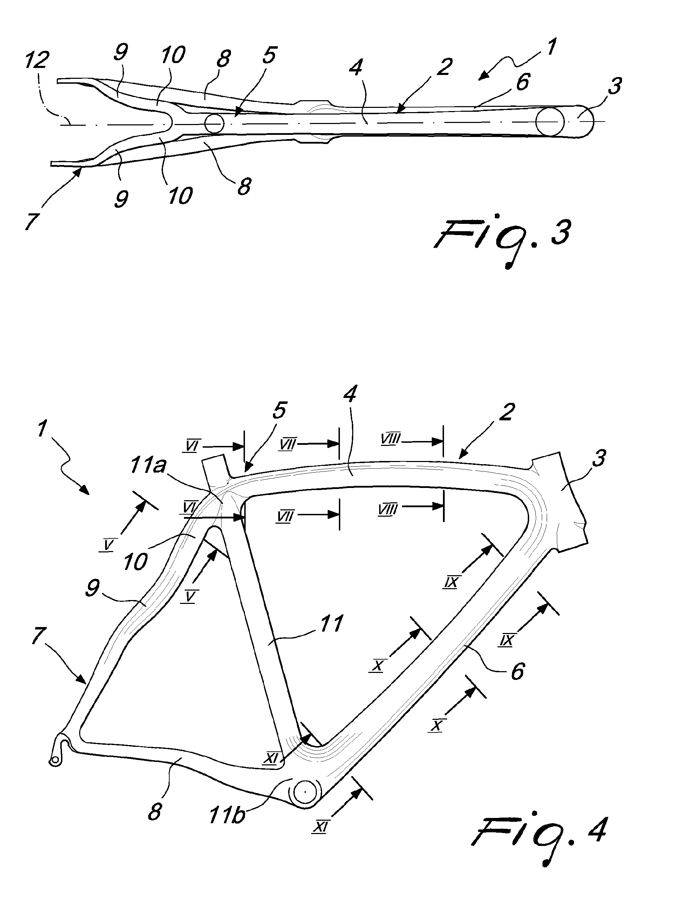

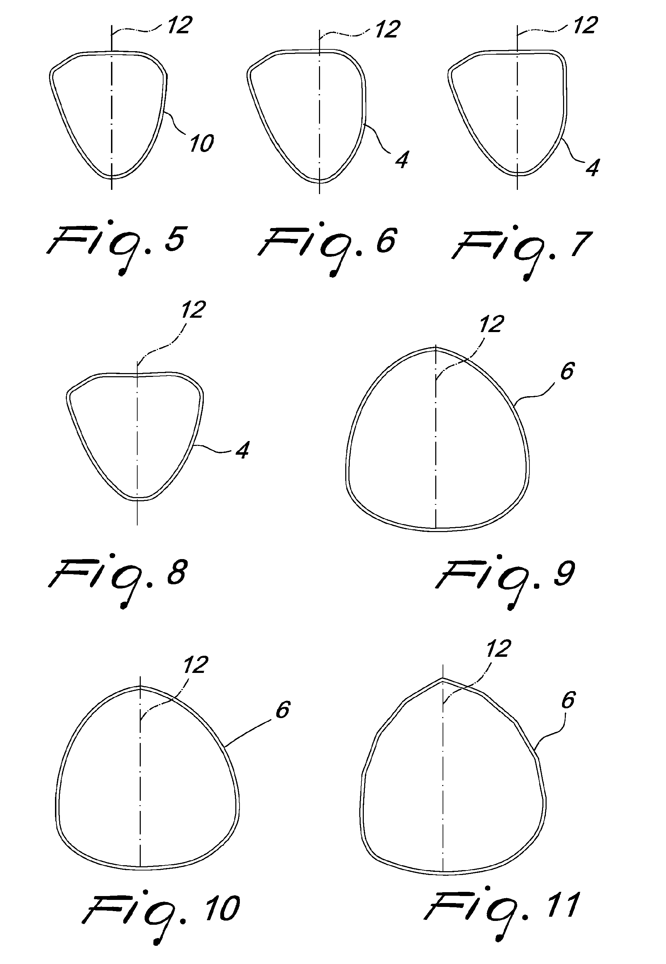

Advantageously, in a second embodiment of the frame 1 as shown in Figures 4 to 11, this structural asymmetry of the resisting transverse cross-section can be achieved by providing a resisting transverse cross-section which has an asymmetric shape with respect to the longitudinal plane 12, maintaining a wall thickness that is substantially constant over the entire cross-section.

It must be stressed that the constancy of the thickness in this second embodiment is to be considered an exemplifying characteristic, since said tubular bodies can be provided manually by means of composite materials, such as for example carbon, and therefore can have minimal thickness variations caused by production operations.

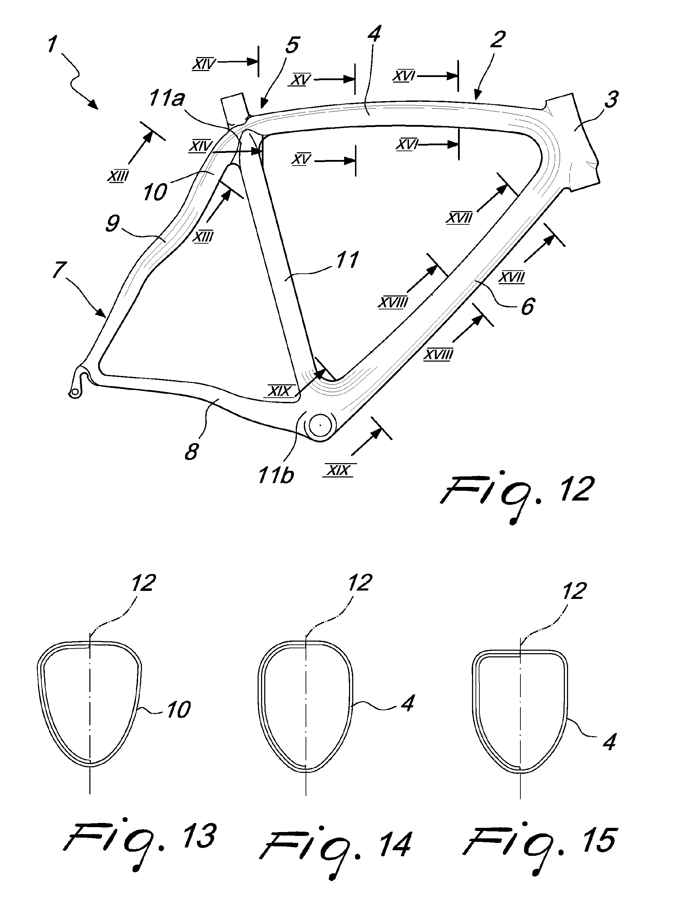

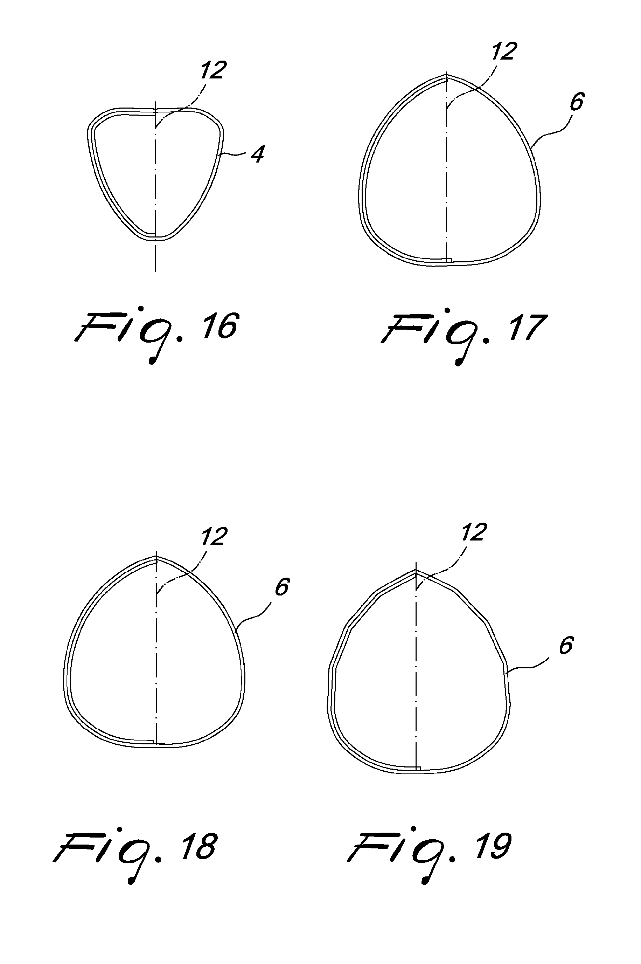

As an alternative, in a third embodiment of the frame 1 as shown in Figures 12 to 19, the structural asymmetry of the resisting transverse cross-section can be achieved by providing a resisting transverse cross-section with a wall thickness that differs between the right half-section and the left half-section, maintaining a shape that is symmetrical with respect to the longitudinal plane 12, which forms the two right and left half-sections.

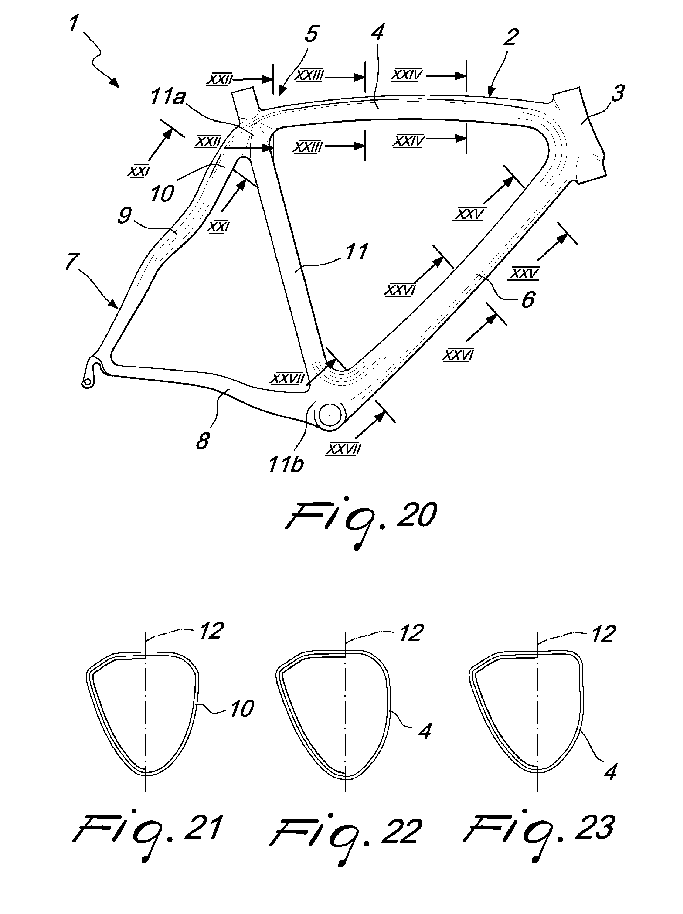

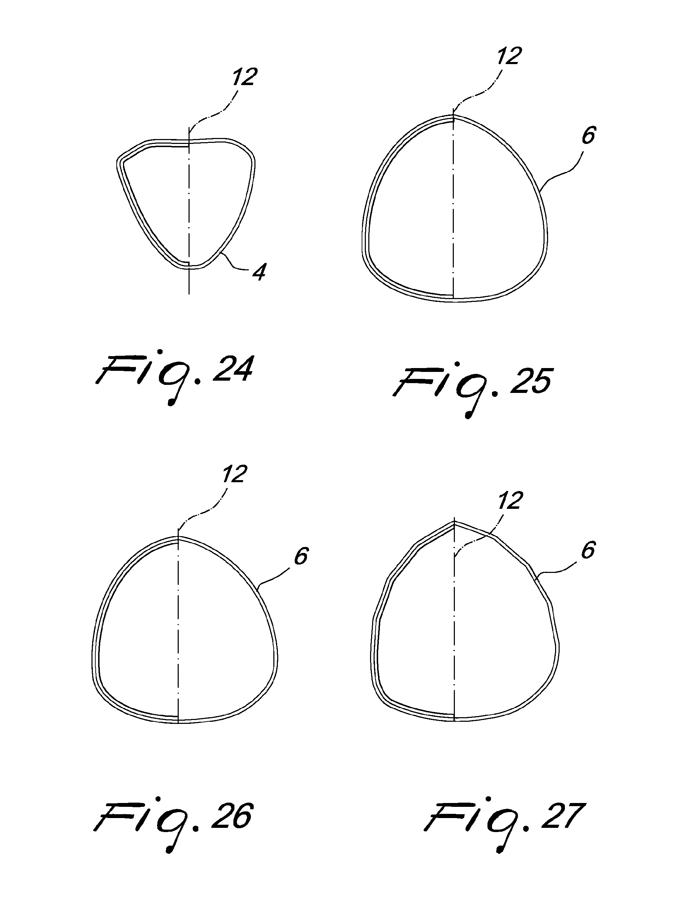

As a further alternative, in a fourth embodiment of the frame 1 shown in Figures 20 to 27, the structural asymmetry of the resisting transverse cross-section can be achieved by providing a resisting transverse cross-section whose wall thickness differs between the right half-section and the left half-section simultaneously with an asymmetric shape of the transverse resisting cross-section with respect to the longitudinal plane 12.

In this manner it is possible to add the effects of the two geometric asymmetries.

Depending on where one wishes to obtain the structural asymmetry of the frame 1, these geometric asymmetries can be applied to the first substantially horizontal tubular body 4 or to the second oblique tubular body 6 or to both tubular bodies 4 and 6.

As for the tubular structure 2, in order to have a flexural and torsional stiffening that is asymmetric with respect to the longitudinal plane 12 of the frame 1 in addition to the stiffening already provided by the geometric asymmetries explained earlier, it is possible to apply the same principle also to the third oblique tubular body 10, so that it has a resisting transverse cross-section that is structurally asymmetric and is obtained by means of a shape asymmetry with respect to the longitudinal plane 12, with a wall thickness that is substantially constant over the entire cross-section, or by means of an asymmetry of the thickness of the wall between the right half-section and the left half-section or by means of a combination of the two preceding cases.

The terms "substantially horizontal" and "substantially vertical" are intended to mean that the elements to which they refer, have slight, acute angular deviations, from the respective vertical or horizontal directions, as shown in the figures and as it is known by the ones skilled in the art.

In practice it has been found that the tubular frame for bicycles, particularly with classic diamond shape, according to the present invention, fully achieves the intended aim and objects, since by varying alternately the shape of the transverse cross-section of the tubular elements that constitute the frame or the thickness of said tubular frames with respect to the longitudinal plane of said bicycle it is possible to have an asymmetric flexural and torsional rigidity, thus achieving optimization of said frame.

The tubular frame for bicycles, particularly with classic diamond shape, thus conceived is susceptible of numerous modifications and variations, all of which are within the scope of the appended claims.

All the details may further be replaced with other technically equivalent elements.

In practice, the materials employed, as long as they are compatible with the specific use, as well as the contingent shapes and dimensions, may be any according to requirements and to the state of the art.

The disclosures in Italian Patent Applications No. TV2008A000132 and TV2008A000133 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tubular frame for bicycles, particularly with classic diamond shape, comprising a tubular structure (2) that forms at least one front head tube (3) that can be connected to a front fork, a first substantially horizontal tubular body (4) that is functionally connected to said head tube (3) and forms an inlet (5) for mounting a saddle and a second oblique tubular body (6) that is functionally connected to said front head tube (3) and can support a central mechanism, **characterized in that** at least one of said tubular bodies (4, 6) has a structurally asymmetric resisting transverse cross-section for asymmetric flexural and torsional stiffening with respect to the longitudinal plane (12) of the frame (1), said longitudinal plane (12) passing through the axis of said first substantially horizontal tubular body (4) and through the axis of said second oblique tubular body (6).

2. The frame according to claim 1, **characterized in that** said substantially horizontal first tubular body (4) has a structurally asymmetric resisting transverse cross-section for a torsional and flexural stiffening that is asymmetric with respect to said longitudinal plane (12).

3. The frame according to claim 1, **characterized in that** said second oblique tubular body (6) has a resisting transverse cross-section that is structurally asymmetric for a flexural and torsional stiffening that is asymmetric with respect to said longitudinal plane (12).

4. The frame according to claim 1, **characterized in that** said first substantially horizontal tubular body (4) and said second oblique tubular body (6) both have a structurally asymmetric resisting transverse cross-section for a flexural and torsional stiffening that is asymmetric with respect to said longitudinal plane (12).

5. The frame according to claim 2 or 3 or 4, **characterized in that** said structurally asymmetric resisting transverse cross-section has a shape that is asymmetric with respect to said longitudinal plane (12), with a wall thickness that is substantially constant over the entire cross-section.

6. The frame according to one or more of the preceding claims, **characterized in that** said structurally asymmetric resisting transverse cross-section has a shape that is symmetrical with respect to said longitudinal plane (12), with a wall thickness that differs between the right half-section and the left half-section, said right half-section and said left half-section being defined by said longitudinal plane (12).

7. The frame according to one or more of the preceding claims, **characterized in that** it comprises a rear carriage (7), which is functionally connected to said tubular structure (2) and comprises two horizontal sleeves (8) and two oblique sleeves (9), said oblique sleeves (9) extending from a third oblique tubular body (10), which is functionally connected to a fourth substantially vertical tubular body (11), which is functionally connected at its ends (11a, 11b) to said first substantially horizontal tubular body (4) and to said second oblique tubular body (6) respectively at said inlet (5) for mounting said saddle and said central mechanism.

8. The frame according to claim 7, **characterized in that** said third oblique tubular body (10) has a structurally asymmetric resisting transverse cross-section for a flexural and torsional stiffening that is asymmetric with respect to said longitudinal plane (12).

9. The frame according to one or more of claims 7 and 8, **characterized in that** said structurally asymmetric resisting transverse cross-section of said third oblique tubular body (10) has an asymmetric shape with respect to said longitudinal plane (12), with a wall thickness that is substantially constant over the entire cross-section.

10. The frame according to one or more of claims 7 to 9, **characterized in that** said structurally asymmetric resisting transverse cross-section of said third oblique tubular body (10) has a shape that is symmetrical with respect to said longitudinal plane (12), with a wall thickness that differs between the right half-section and the left half-section, said right half-section and said left half-section being defined by said longitudinal plane (12).
